# EUROPÄISCHE PATENTSCHRIFT

(11) **EP 1 411 759 B1**
(45) Veröffentlichungstag und Bekanntmachung des Hinweises auf die Patenterteilung: **25.01.2006**
(21) Anmeldenummer: 02719947.0
(22) Anmeldetag: 27.02.2002
(51) Int. Cl.: A01F 15/14, A01F 15/08

(54) **VERFAHREN UND VORRICHTUNG ZUM PRESSEN VON VIERKANTBALLEN FÜR HALMGUT**
METHOD AND DEVICE FOR COMPRESSING SQUARE BALES FOR STALK MATERIAL
PROCEDE ET DISPOSITIF DE PRESSAGE POUR FORMER DES BALLES PARALLELEPIPEDIQUES DE MATIERE EN BRINS

(43) Veröffentlichungstag der Anmeldung: 28.04.2004
(73) Patentinhaber: Maschinenfabrik Bernard Krone GmbH, 48480 Spelle (DE)
(72) Erfinder: FREIHART, Josef, 92358 Seubersdorf (DE)
(74) Vertreter: Busse & Busse Patentanwälte
(86) Internationale Anmeldenummer: PCT/EP2002/002106
(87) Internationale Veröffentlichungsnummer: WO 2003/071858

(56) Entgegenhaltungen:
- EP-A- 0 429 798
- EP-A- 0 880 886
- DE-A- 2 820 241
- DE-A- 19 520 751

## Beschreibung

Die Erfindung betrifft ein Verfahren und eine Vorrichtung zum Pressen von Vierkantballen für Halmgut, insbesondere Heu und Stroh, auf Großballenpressen mit den Längs- und Stirnseiten des Großballens übergreifenden, miteinander verknoteten Schnüren, wobei die Großpreßballen durch eine Anzahl aneinandergestellte, eigenständig gepreßte und gebundene Kleinballen bildbar sind. Dies ist aus EP-A-0 429 798 bekannt.

Bekannterweise zeichnen sich die auf Großballenpressen gefertigten Großballen durch ein großes Gewicht aus, wodurch diese unhandlich sind und zum Transport und Lagerung aufwendige maschinelle Einrichtungen benötigen. Andererseits ist die Bergung der Großballen mit geringem Zeitaufwand durchführbar. Um die Handlichkeit von gepreßten Heu- und Strohballen zu verbessern, sind auch Kleinballen bekannt, die sich zwar von Hand oder kleinen Hilfmitteln, wie Schubkarren od.dgl. leicht transportieren lassen, andererseits jedoch zum Einfahren und Lagern einen großen Arbeitsaufwand erforderlich machen.

Die Erfindung hat zur Aufgabe Maßnahmen bei Großballenpressen zu schaffen, die sowohl die Herstellung von Vierkantgroßballen als auch Kleinballen ermöglichen.

Gemäß der Erfindung ist diese Aufgabe durch die Maßnahmen des kennzeichnenden Teils des Anspruches 1 gelöst. Durch die Verfahrensschritte sind nunmehr je nach Aktivierung der Bindeeinheiten Großballen oder Kleinballen herstellbar und somit eine Anpassung des Pressen- und Transportvorgangs und der Lagerung sowie der Benutzung in vorteilhafter Weise gegeben. Dabei können beliebig die Bindeeinheiten mit Einfach- oder Doppelknoter zum Einsatz kommen. Dem Benutzer der Großballenpresse wird so die Möglichkeit gegeben, wahlweise sein zur Pressung vorgesehenes Halmgut entweder insgesamt gesehen in Großballen oder in Kleinballen als auch mit beliebigen Teilmengen beider Ballentypen auszuführen.

Bei einer Vorrichtung zur Durchführung des Verfahrens ist vorgesehen, daß die als Einfachknoter ausgebildete Bindeeinheit an- und abschaltbare Knoterapparate mit permanent anliegenden Bindeschnüren aufweist und daß die der Zwischenbindung der Kleinballen dienenden Knoterapparate getrennt unabhängig aktivierbar und mit einer den aktivierten Knoterapparaten entsprechenden Anzahl an schwenkbaren Nadeln zur Wirkung bringbar sind, während die restlichen Nadeln in Ruhestellung verbleiben.

Bevorzugt sind die Knoterapparate für die Zwischen- und Hauptbindung der Ballen auf einer Außenwelle mit Innenverzahnung angeordnet, die eine mit der Innenverzahnung kämmende Innenwelle mit Außenverzahnung aufnimmt, die Außen- und Innenwellen durch Kuppelglieder, z.B. Stern-, Reibungs-, Magnet-, Räderkupplung od.dgl. miteinander verbindbar oder voneinander trennbar sind und durch Relativ-Verschiebung der Innenwelle zur Außenwelle die Knoterapparate für die Zwischenbindung an- und abschaltbar sind, wobei zur Ansteuerung der Innenwelle ein den Preßballen kontaktierendes Längenmeßrad über ein elektromagnetisches Steuergerät einen an der Innenwelle angreifenden Druckzylinder positioniert.

In Ausgestaltung der Vorrichtung ist vorgesehen, daß die Nadeln für die Zwischenbindung und die übrigen zur Hauptbindung benötigten Nadeln auf einem ersten und einem zweiten achsparallel nebeneinander verschwenkbar ausgebildeten Träger, z.B. auf Rohren, Profilstangen od.dgl. angeordnet sind, durch den zweiten Träger die Nadeln für die Zwischenbindung getrennt den vorbestimmten Knotenapparaten zuführbar sind und daß beide Träger hydraulisch oder mechanisch miteinander verriegelt, die Nadeln für die Zwischenbindung und der Hauptbindung den zweiten und ersten Knoterapparaten gleichzeitig zuführen.

In Fortbildung der Vorrichtung besteht die Möglichkeit, die der Zwischenbindung von Kleinballen und die der Hauptbindung dienenden Nadeln gemeinsam auf einer Welle nebeneinander anzuordnen und die der Zwischenbindung dienenden Nadeln gegenüber den übrigen getrennt unabhängig antreibbar auszubilden, die sodann aktivierten Knoterapparaten für die Bindung von Kleinballen zugeführt werden können.

Desweiteren ist noch vorgesehen, daß die mit Doppelknoter arbeitende Bindeeinheit erste und zweite Knoterapparate ohne permanent anliegende Bindeschnüre aufweist und daß den Knoterapparaten ein gemeinsamer Träger für mit Schnüren bestückten Nadeln zugeordnet ist und die ersten Knoterapparate mit zugehörigen Nadeln von diesen zu Zwischenbindungen zum Einsatz bringbar sind und die ersten und zweiten Knoterapparate zur Bildung eines Großballens gleichzeitig mit den Nadeln der Zwischenbindung und den übrigen Nadeln zur Wirkung bringbar sind. Hierdurch arbeiten die Doppelknoter ohne Knoterabschaltung, da bei dieser Bindetechnik kein ständiges Einhängen von Schnüren in den Knoterapparaten vorgesehen ist und somit nur diejenigen Knoterapparate binden, denen Nadeln mit Schnüren zugeführt werden.

Schließlich ist noch vorgesehen, die Nadeln für die Zwischenbindung der Kleinballen durch eine Drehbewegung des die Nadeln tragenden zweiten Trägers den Knoterapparaten zuzuführen und für eine behinderungsfreie Anschwenkung der Nadeln des zweiten Trägers Durchführungsöffnungen, Aussparungen, Absetzungen od.dgl. im ersten Träger vorzusehen oder durch entsprechende Zuordnung der beiden Träger die Nadeln aneinander vorbeizuführen.

Desweiteren ist auch denkbar, die Nadelträger miteinander oder getrennt einzeln zum Zwecke der Wirkverbindung mit den Knoterapparaten verschwenk- und/oder verschiebbar auszubilden.

Die Erfindung ist anhand von Ausführungsbeispielen in den Figuren verdeutlicht. Hierin bedeuten:
- Fig. 1: eine Großballenpresse zur Durchführung des Verfahrens, perspektivisch,
- Fig. 2: auf Trägern angeordnete Nadeln für Kleinballen und zugehörigen Nadeln,
- Fig. 3: eine Trägerwelle für Knotenapparate in Seitenansicht,
- Fig. 4: eine Kupplung für eine Trägerwelle gemäß Fig.3, im Schnitt,
- Fig. 5: ein Tragrohr mit Nadeln in Draufsicht,
- Fig. 6: ein Tragrohr für eine Nadelanordnung gemäß der Fig. 5 in abweichender Ausgestaltung,
- Fig. 7: ein Tragrohr mit einer Nadel, perspektivisch,
- Fig. 8: ein weiteres Tragrohr mit Nadeln in Draufsicht,
- Fig. 9: ein Meßrad, perspektivisch.
- Fig. 10: einen Großballen mit Kleinballen, perspektivisch und
- Fig.11: ein Tragrohr mit Nadeln in Draufsicht.

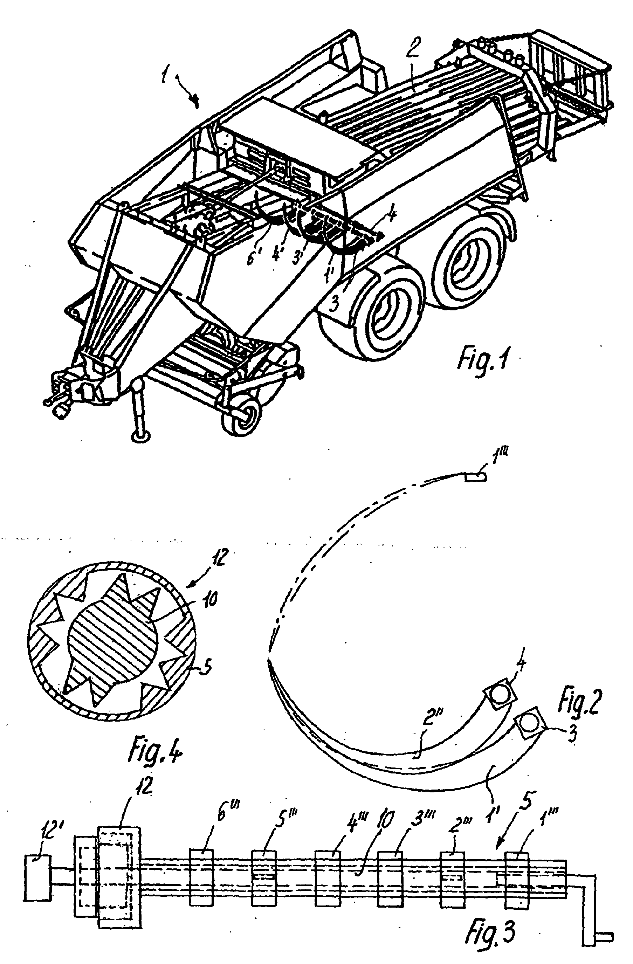

In den Figuren ist mit 1 eine Vierkant-Großballenpresse und mit 2 ein Preßkanal bezeichnet. Desweiteren sind Träger 3 und 4 mit ersten und zweiten Nadeln 1', 3', 4', 6', bzw. 1'', 5'' bestückt. Auf einer den Nadeln zugeordneten Trägerwelle 5 (Fig.3) sind fernerhin sechs Knoterapparate 1''' - 6''' angeordnet. Die Trägerwelle 5 ist mit einer Innenverzahnung mit einer außenverzahnten Innenwelle 10 in Eingriff. Beide Wellen 5 und 10 sind durch eine Kupplung 12, wie in Fig. 4 dargestellt, miteinander verbindbar.

Die Nadeln 1', 3', 4' und 6' sind auf den mit prismatischem Querschnitt versehenen Träger 3 drehfest aufgebracht. Schließlich ist Träger 9 (Fig. 8) für die Nadeln 1', 2'', 3', 4', 5'', 6' zum Einsatz bringbar, der eine innenverzahnte Kuppelwelle 9' aufnimmt, die über die Kupplung 11 die Nadeln 2" und 5" entweder zum Pressen von Kleinballen oder die Nadeln 1', 3', 4', 6' und 2", 5" zum Pressen von Großballen insgesamt aktiviert.

Nachstehend ist ein Beispiel für eine Zwischenbindung von Kleinballen an einer Presse mit Einfachknoter erläutert.

### Beispiel Zwischenbindung:

Ein Beispiel zur Zwischenbindung ist an einer Presse mit Einfachknotern 1,20 m Ballenbreite und 70 cm Höhe demonstriert. Die Ballen sind insbesondere mit sechs Schnüren abgebunden.

Da beim Einfachknoter ständig in jedem Knoterapparat eine Schnur sein muß und bei sechs Knoterapparaten 1''' - 6''' bei der Zwischenbindung die vier ruhenden Knoterapparate 1''', 3''', 4''', 6''' nicht zum Auslösen kommen dürfen, müssen diese Knoterapparate an- und abschaltbar eingebaut werden. (Fig. 3)

Zur Knoterapparate An- und Abschaltung.

Dieses Problem kann auf folgende Art gelöst werden. Es wird eine innenverzahnte Hohlwelle 5 zur Platzierung der Knoterapparate 1''' - 6''' genommen. In der Hohlwelle 5 ist eine außenteilverzahnte Innenwelle 10 geführt. Durch Verschieben und Teildrehen der Innenwelle 10 mittels einer Kupplung 12 sind die gewünschten Knoterapparate zu- und abschaltbar. Die Ansteuerung der Innenwelle 10 erfolgt über ein Längenmeßrad 15 am Ballen, welches zum gewünschten Zeitpunkt über ein elektromagnetisches Hydrauliksteuergerät 12' einen an der innenverzahnten Welle 10 befestigten Zylinder richtig positioniert.

Zur geistigen Vertiefung wird noch ein Arbeitsbeispiel beschrieben, in dem ein Ballen mit 2 m Gesamtlänge in, z.B. 5 Teilen dargestellt ist.

Zu Beginn des Preßvorgangs liegen sechs eingefädelte Schnüre in den Einfachknoterapparaten 1''' - 6'''. Nun wird Material in den Preßkanal 2 zu den ausgelegten Schnüren geschoben. Nach ca 40cm Ballenführung wird die erste Zwischenbindung mit dem zweiten 2''' und fünften''' Knotenapparat ausgelöst. Der gleiche Ablauf ist noch vier Mal zu wiederholen. Um den Ballen jetzt fertigzustellen, müssen beim letzten Mal wieder alle sechs Knoterapparate zur Bildung eines Großballens ausgelöst werden.

Für die Zwischenbindung der Kleinballen ist die Nadelschwinge so angefertigt, daß je nach Bedarf alle Nadeln oder bloß zwei zu den Knoterapparaten geführt werden.

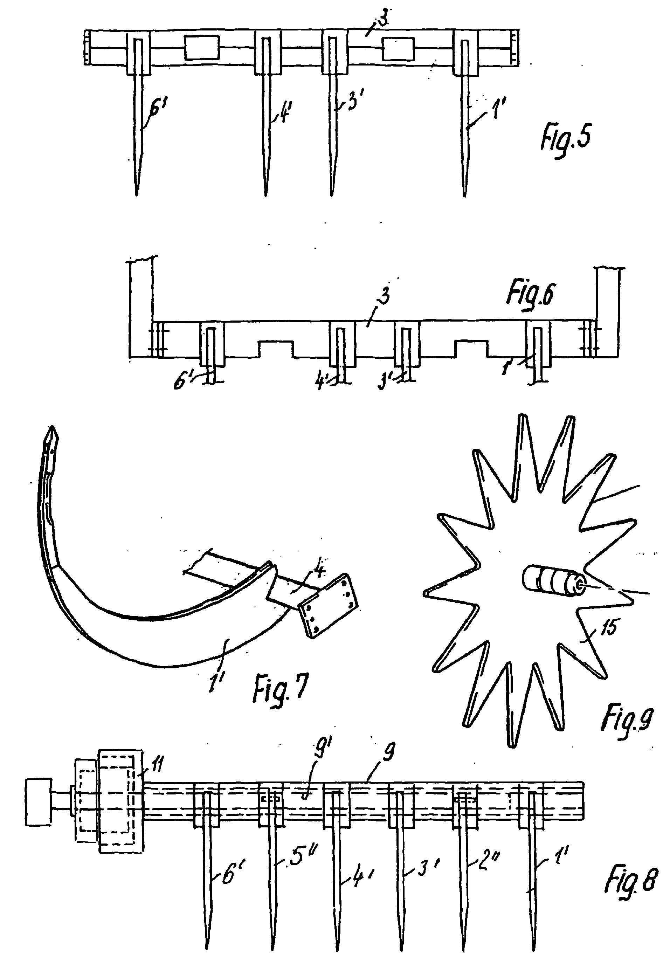

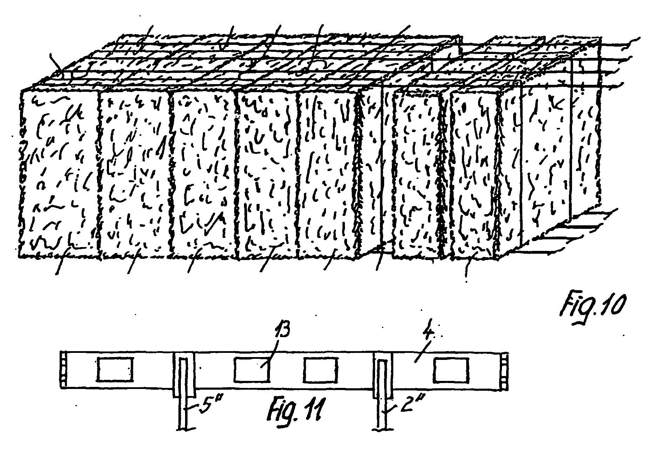

Für die Zwischenbindung des Beispielballens müssen die Nadeln 2" und 5'' ausgelöst werden. Die Nadeln 1', 3', 4' und 6' müssen in Ruhestellung verbleiben. Das Problem ist, z.B. so zu lösen, in dem die Nadeln 2'' und 5" auf einen Träger 4 (Fig.11) montiert sind und der Träger 4 mit Aussparungen 13 für die Nadeln 1', 3', 4' und 6' angefertigt ist. So kann bei einem Zwischenbindevorgang mit der Nadelschwinge der Träger 4 mit zwei Nadeln hochgezogen werden. Wenn ein Bindevorgang mit allen Nadeln ausgelöst werden soll um den Ballen komplett abzubinden, können die Nadeln 1', 3', 4' und 6', welche auf einem zweiten Träger 3 (Fig. 5) mit Schwinge aufgebaut sind, im Ruhestand miteinander hydraulisch / mechanisch verriegelt und alle Nadeln in einem Zug den sechs Knoterapparaten zugeführt werden, wobei je nach Zuordnung der Träger 3 und 4 die Nadeln 1', 3', 4', 6' die Aussparungen 13 des Trägers 4 durchgreifen oder aneinander vorbeiführbar sind. Die Fig. 6 zeigt eine abgewandelte Ausführungsform des Trägers 3.

Bei Maschinen mit Doppelknotern ist eine Knoterabschaltung nicht nötig, weil bei dieser Technik keine Schnüre ständig in den Knoterapparaten hängen und somit nur die Knoterapparate abbinden können, welche mit den Nadeln Schnüre zugeführt erhalten.

## Patentansprüche

1. Verfahren zum Pressen von Vierkantgroßballen für Halmgut, insbesondere Heu und Stroh, auf Großballenpressen mit den Längs- und Stirnseiten des Großballens übergreifenden, miteinander verknoteten Schnüren, wobei die Großballen durch eine Anzahl aneinandergestellte, eigenständig gepreßte und gebundene Kleinballen bildbar sind, **dadurch gekennzeichnet, daß** dem Preßkanal der Großballenpresse zwei Bindeeinheiten zugeordnet sind, und daß wahlweise eine Bindeeinheit zum Binden von einzelnen Kleinballen oder beide Bindeeinheiten zum gleichzeitigen gemeinsamen Binden mehrerer Kleinballen zu einem Großballen einzeln aktiviert und beide Bindeeinheiten mit den gleichen Knoterapparaten zum Einsatz gebracht werden.

2. Verfahren nach Anspruch 1, **dadurch gekennzeichnet, daß** die Bindeeinheiten als Einfach- oder Doppelknoter ausgebildet sind.

3. Vorrichtung zur Durchführung des Verfahrens nach Anspruch 2, **dadurch gekennzeichnet, daß** die als Einfachknoter ausgebildete Bindeeinheit an- und abschaltbare Knoterapparate (1''' - 6''') mit permanent anliegenden Bindeschnüren aufweist und daß die der Zwischenbindung der Kleinballen dienenden Knoterapparate (2''', 5''') getrennt unabhängig aktivierbar und mit einer den aktivierten Knoterapparaten entsprechenden Anzahl an schwenkbaren Nadeln (2'', 5"), z.B. zwei Nadeln, zur Wirkung bringbar sind, während die restlichen Nadeln (1'', 3'', 4'', 6'') in Ruhestellung verbleiben.

4. Vorrichtung nach Anspruch 3, **dadurch gekennzeichnet, daß** die Knoterapparate (1''' - 6"')für die Zwischen- und Hauptbindung der Ballen auf einer Außenwelle (5) mit Innenverzahnung angeordnet sind, die Außenwelle (5) eine mit der Innenverzahnung kämmende Innenwelle (10) mit Außenverzahnung aufnimmt, die Außen- und Innenwelle durch Kuppelglieder (12), z.B. Stern-, Reibungs-, Magnet-, Räderkupplung od.dgl. miteinander verbindbar oder voneinander trennbar sind und daß durch Relativ-Verschiebung der Innenwelle (10) zur Außenwelle (5) die Knoterapparate (2''', 5"')für die Zwischenbindung ein- und abschaltbar sind, wobei zur Ansteuerung der Innenwelle (10) ein den Preßballen kontaktierendes Längenmeßrad (15) über ein elektromagnetisches Steuergerät einen an der Innenwelle (10) angreifenden Druckzylinder positioniert.

5. Vorrichtung zur Durchfürhrung des Verfahrens nach Anspruch 2, **dadurch gekennzeichnet, daß** die einen Doppelknoter bildende Bindeeinheit durch Schnurführende Nadeln getrennt aktivierbare erste und zweite Knoterapparate (1''' - 6''') ohne permanent anliegende Bindeschnüre aufweist, daß den Knoterapparaten ein gemeinsamer Träger (9') für mit Schnüren bestückten Nadeln (1' - 6')zugeordnet ist, daß die ersten Knoterapparate (2''', 5''') mit zugehörigen Nadeln (2", 5") zum Binden von Kleinballen zum Einsatz kommen und die ersten und die zweiten Knoterapparate (1''' - 6"') zur Bildung eines Großballens gleichzeitig gemeinsam mit den Nadeln (2", 5") für die Zwischenbindung und den übrigen Nadeln (1', 3', 4', 6')zur Wirkung bringbar sind.

6. Vorrichtung nach Anspruch 3 oder 5, **dadurch gekennzeichnet, daß** die Nadeln (2'', 5'') für die Zwischenbindung und die übrigen zur Hauptbindung benötigten Nadeln (1', 3', 4', 6') je auf einem ersten und einem zweiten achsparallel nebeneinander ausgebildeten, verschwenkbaren Träger (3, 4), z.B. Rohren, Profilstangen od.dgl. angeordnet sind, durch den ersten Träger (3) die Nadeln 1',3', 4', 6' für die Hauptbindung getrennt den ersten Knoterapparaten 1''', 3''', 4''', 6''' zuführbar sind und daß der erste und zweite Träger (3, 4) hydraulisch oder mechanisch miteinander verriegelt ihre Nadeln 1', 3', 4', 6' und 2'', 5" für die Zwischen- und Hauptbindung den ersten und zweiten Knoterapparaten 1''', 2"', 3''', 4''', 5''', 6''' gleichzeitig zuführen.

7. Vorrichtung nach Anspruch 5, **dadurch gekennzeichnet, daß** die Nadeln (2'', 5") für die Zwischenbindung der Kleinballen oder die Nadeln 1', 3', 4', 6') der Großballen durch eine Drehbewegung des die Nadeln tragenden ersten oder zweiten Trägers den Knoterapparaten zuführbar sind und daß für eine behinderungsfreie Anschwenkung jeweils der übrigen Nadeln vermittels einer Drehbewegung des zugehörigen Trägers an den Knoterapparaten, im ersten oder zweiten Träger Durchführungsöffnungen, Aussparungen, Absetzungen od.dgl. für die Nadeln vorgesehen sind.

8. Vorrichtung nach Anspruch 6, **dadurch gekennzeichnet, daß** die der Zwischenbindung und die der Hauptbindung dienenden Nadeln (1', 2'', 3', 4', 5'', 6') gemeinsam auf einer Welle (9') nebeneinander aufgeordnet sind und daß die der Zwischenbindung dienenden Nadeln (2", 5") gegenüber den übrigen Nadeln (1', 3', 4, 6'getrennt unabhängig oder gemeinsam mit den übrigen Nadeln zur Bindung eines Großballens gleichzeitig antreibbar sind.

9. Vorrichtung nach Anspruch 6, **dadurch gekennzeichnet, daß** die Nadelträger (3, 4) insgesamt gemeinsam oder getrennt einzeln zur Wirkverbindung der Nadeln mit den Knoterapparaten vermittels Schwingen verschwenk- und/oder verschiebbar sind.

## Claims

1. Method of compressing square big bales, for stalked crops and particularly hay and straw, on big balers employing twines which fit round the longitudinal faces and end-faces of the big bale and are knotted together, the big bales being able to be formed by a plurality of small bales which are compressed and tied separately and placed against one another, **characterised in that** the compression passage of the big baler has two tying units associated with it, and **in that**, as desired, one tying unit is activated individually to tie individual small bales, or both tying units are activated individually to tie a plurality of small bales into a large bale in unison and simultaneously, and the two tying units can be brought into operation with the same knotting devices.

2. Method according to claim 1, **characterised in that** the tying units are in the form of single knotters or double knotters.

3. Arrangement for performing the method according to claim 2, **characterised in that** the tying unit in the form of a single knotter has knotting devices (1''' - 6"') which can be switched on and off and which have tying twines which rest against them at all times, and **in that** the knotting devices (2''' - 5''') which are used for the intermediate tying of the small bales are able to be activated separately and independently and to be brought into action together with a number ofpivotable tines (2", 5"), e.g. two tines, which corresponds to the knotting devices which have been activated, while the rest of the tines (1", 3", 4", 6") remain in a rest position.

4. Arrangement according to claim 3, **characterised in that** the knotting devices (1"' - 6''') for the intermediate and main tying of the bales are arranged on an outer shaft (5) having internal teeth, the outer shaft (5) holds an inner shaft (10) which meshes with the internal teeth, and the inner and outer shafts can be connected to one another or disconnected from one another by coupling members (12), e.g. by star coupling, frictional coupling, magnetic coupling, gear coupling or the like, and **in that** the knotting devices (2"', 5''') for the intermediate tying can be switched on and off by displacement of the inner shaft (10) relative to the outer shaft (5), a pressure-applying cylinder which engages with the inner shaft (10) being positioned, by means of an electromagnetic control unit, by a length measuring wheel (15) which contacts the bale, in order to operate the inner shaft (10).

5. Arrangement for performing the method according to claim 2, **characterised in that** the tying unit which forms a double knotter has first and second knotting devices (1''' - 6''') which do not have tying twines resting against them at all times and which can be activated separately by twine-carrying tines, **in that** the knotting devices have associated with them a shared carrier (9') for tines (1' - 6') provided with twines, **in that** the first knotting devices (2"', 5''') come into operation together with associated tines (2", 5") to tie small bales, and, to form a big bale, the first and second knotting devices (1"' - 6"') can be brought into action simultaneously and in unison with the tines (2", 5") for the intermediate tying and the rest of the tines (1', 3', 4', 6').

6. Arrangement according to claim 3 or 5, **characterised in that** the tines (2", 5") for the intermediate tying and the rest of the tines (1', 3', 4', 6'), which are required for the main tying, are arranged on respective first and second pivotable carriers (3, 4), e.g. tubes, profiled rods or the like, which are set up next to another with their axes parallel, and the tines 1', 3', 4', 6' for the main tying can be applied to the first knotting devices 1''', 3"', 4"', 6"' separately, and **in that** the first and second carriers (3, 4), when locked together hydraulically or mechanically, apply their tines 1', 3', 4', 6' and 2", 5" for the intermediate and main tyings to the first and second knotting devices 1''', 2''', 3''', 4''', 5"', 6''' simultaneously.

7. Arrangement according to claim 5, **characterised in that** the tines (2", 5") for the intermediate tying of the small bales or the tines (1', 3', 4', 6') for the big bales can be applied to the knotting devices by a rotary movement of the first or second carrier carrying the tines, and **in that**, to allow whichever are the other tines to be pivoted against the knotting devices without obstruction by means of a rotary movement of the associated carrier, there are provided in the first or second carrier, openings for passage, cutouts, offsets or the like for the tines.

8. Arrangement according to claim 6, **characterised in that** the tines (1', 2', 3', 4', 5', 6') used for the intermediate tying and the main tying are together arranged next to one another on a shaft (9') and **in that** the tines (2", 5") used for the intermediately tying can be actuated separately from and independently of the rest of the tines (1', 3', 4', 6') or simultaneously and in unison with the rest of the tines for tying a big bale.

9. Arrangement according to claim 6, **characterised in that** to bring the tines into operative connection with the knotting devices, the tine carriers (3, 4) can be pivoted and/or displaced as complete units, in unison or separately, by means of rocker arms.

## Revendications

1. Procédé de pressage pour former des grandes balles parallélépipédiques de matière en brins, en particulier de foin et de paille, sur des presses pour grandes balles avec des ficelles nouées les unes aux autres et ceinturant les côtés longitudinaux et frontaux de la grande balle, dans lequel les grandes balles peuvent être formées à partir de plusieurs petites balles juxtaposées, pressées individuellement et assemblées, **caractérisé en ce que** deux unités de liage sont associées au canal de pressage de la presse pour grandes balles et **en ce que**, au choix, une unité de liage est activée pour lier des petites balles individuelles ou les deux unités de liage sont activées individuellement pour lier en commun simultanément plusieurs petites balles en une grande balle et les deux unités de liage sont utilisées avec les mêmes appareils de liage.

2. Procédé selon la revendication 1, **caractérisé en ce que** les unités de liage sont réalisées sous la forme de lieuses simples ou doubles.

3. Dispositif pour la mise en oeuvre du procédé selon la revendication 2, **caractérisé en ce que** l'unité de liage réalisée sous la forme de lieuse simple présente des appareils de liage connectables et déconnectables (1''' - 6''') avec des ficelles de liage appliquées en permanence et **en ce que** les appareils de liage (2''', 5''') servant pour le liage intermédiaire des petites balles peuvent être activés séparément de manière indépendante et peuvent être mis en action avec un nombre d'aiguilles pivotantes (2", 5"), par exemple deux aiguilles, qui correspond aux appareils de liage activés, tandis que les aiguilles restantes (1", 3", 4", 6") restent en position de repos.

4. Dispositif selon la revendication 3, **caractérisé en ce que** les appareils de liage (1''' - 6''') pour le liage intermédiaire et le liage principal des balles sont disposés sur un arbre extérieur (5) pourvu d'une denture intérieure, l'arbre extérieur (5) contient un arbre intérieur (10) pourvu d'une denture extérieure en prise avec la denture intérieure, l'arbre extérieur et l'arbre intérieur peuvent être assemblés l'un à l'autre ou séparés l'un de l'autre par des éléments de couplage (12), par exemple un couplage en étoile, à friction, magnétique, par galets, et analogues, et **en ce que** les appareils de liage (2''', 5''') pour le liage intermédiaire peuvent être connectés ou déconnectés par un mouvement relatif de l'arbre intérieur (10) par rapport à l'arbre extérieur (5), dans lequel, pour la commande de l'arbre intérieur (10), une roue de mesure de longueur (15) en contact avec les balles pressées positionne un cylindre de pression actionnant l'arbre intérieur (10) par l'intermédiaire d'un appareil de commande électromagnétique.

5. Dispositif pour la mise en oeuvre du procédé selon la revendication 2, **caractérisé en ce que** l'unité de liage constituant une lieuse double présente des premiers et deuxièmes appareils de liage (1''' - 6''') pouvant être activés séparément par des aiguilles de guidage de ficelle sans ficelles de liage appliquées en permanence, **en ce qu'**un support commun (9') pour des aiguilles (1' - 6') garnies de ficelles est associé aux appareils de liage, **en ce que** les premiers appareils de liage (2''', 5''') avec des aiguilles correspondantes (2", 5") sont utilisés pour lier des petites balles et les premiers et deuxièmes appareils de liage (1''' - 6''') peuvent être mis en action simultanément en même temps que les aiguilles (2", 5") pour le liage intermédiaire et que les autres aiguilles (1', 3', 4', 6') pour la formation d'une grande balle.

6. Dispositif selon la revendication 3 ou 5, **caractérisé en ce que** les aiguilles (2", 5") pour le liage intermédiaire et les autres aiguilles (1', 3', 4', 6') requises pour le liage principal sont disposées respectivement sur un premier et un deuxième support pivotant (3, 4), réalisés l'un à côté de l'autre parallèlement à l'axe, par exemple des tubes, des barres profilées ou analogues, les aiguilles (1', 3', 4', 6') pour le liage principal peuvent être fournies séparément aux premiers appareils de liage (1''', 3''', 4''', 6''') par le premier support (3), et **en ce que** le premier et le deuxième supports (3, 4), verrouillés l'un à l'autre de façon hydraulique ou mécanique, fournissent simultanément leurs aiguilles (1', 3', 4', 6') et (2", 5") pour le liage intermédiaire et le liage principal aux premiers et deuxième appareils de liage (1''', 2''', 3''', 4''', 5''', 6''').

7. Dispositif selon la revendication 5, **caractérisé en ce que** les aiguilles (2", 5") pour le liage intermédiaire des petites balles ou les aiguilles (1', 3', 4', 6') des grandes balles peuvent être fournies aux appareils de liage par un mouvement de rotation du premier ou du deuxième support portant les aiguilles et **en ce que**, pour permettre un pivotement sans obstacle des autres aiguilles respectives au moyen d'un mouvement de rotation du support correspondant vers les appareils de liage, il est prévu dans le premier ou le deuxième support des ouvertures de passage, des évidements, des retraits ou analogues pour les aiguilles.

8. Dispositif selon la revendication 6, **caractérisé en ce que** les aiguilles (1', 2", 3', 4', 5", 6') servant pour le liage intermédiaire et pour le liage principal sont disposées l'une à côté de l'autre en commun sur un arbre (9') et **en ce que** les aiguilles (2", 5") servant pour le liage intermédiaire peuvent être entraînées simultanément, de manière indépendante séparément par rapport aux autres aiguilles (1', 3', 4', 6') ou en même temps que les autres aiguilles, pour le liage d'une grande balle.

9. Dispositif selon la revendication 6, **caractérisé en ce que** les supports d'aiguilles (3, 4) peuvent pivoter et/ou être déplacés globalement par oscillation en commun ou séparément l'un de l'autre pour la liaison active des aiguilles avec les appareils de liage.
